# EUROPEAN PATENT SPECIFICATION

(11) **EP 1 009 708 B1**
(45) Date of publication and mention of the grant of the patent: **27.11.2002**
(21) Application number: 98944583.8
(22) Date of filing: 28.08.1998
(51) Int. Cl.: B66F 11/04, B66F 17/00

(54) **MOTOR COVER FOR A WORK ASSIST VEHICLE**
MOTORDECKEL FÜR ARBEITSFAHRZEUG
CAPOT DE MOTEUR POUR VEHICULE AUXILIAIRE D'ATELIER

(30) Priority: 02.09.1997 US 57849 P; 29.09.1997 US 60287 P
(43) Date of publication of application: 21.06.2000
(73) Proprietor: CROWN EQUIPMENT CORPORATION, New Bremen, OH 45869 (US)
(72) Inventor: LUEBRECHT, Donald E., Ft. Jennings, OH 45844 (US); GILLILAND, Kevin, A., Coldwater, OH 45828 (US); RANLY, Matthew, P., Minster, OH 45865 (US); STAMMEN, Harold, A., New Bremen, OH 45869 (US); HEIDEMANN, William, J., Sidney, OH 45365 (US); SMITH, David, B., Worthington, OH 43085 (US)
(74) Representative: Cummings, Sean Patrick
(86) International application number: US9817855
(87) International publication number: WO99011557

(56) References cited:
- EP-A- 0 557 685
- WO-A-92/16706
- WO-A-98/09910
- CH-A- 685 624
- FR-A- 2 717 456
- GB-A- 885 824
- US-A- 4 258 825

## Description

### Background of the Invention

This invention relates in general to electric powered work assist vehicles that are particularly useful in transporting items retrieved from shelves in a warehouse, or as a work platform which allows an operator to be raised approximately six feet or more from a floor of a work area and, more particularly, to such a vehicle having a weight sensor assembly for detecting if someone or something is located on a portion of the vehicle beneath a vertically movable passenger compartment.

Small parts picking is currently done by personnel manually pushing carts equipped with several shelves and a low level ladder which the operator climbs for reaching stock items up to nine feet high. Higher elevation picking, up to twelve feet, is accomplished with large manual push-in-place mobile ladder stands. Both the carts and mobile ladder stands require the operator to climb up and down while manually holding the goods.

A compact aerial lift vehicle which can be used for parts picking is disclosed in U.S. Patent No. 5,273, 132. The vehicle is separable into several parts for storage and can be controlled by an operator supported upon a platform which can be elevated along a vertical post member removably mounted upon a body of the vehicle. There is no provision for preventing the platform from being lowered onto someone or something located on the body beneath the platform. Such action can injure or damage whatever is on the body or cause harm to the platform and/or the vehicle body if the platform is allowed to be lowered. Injury, damage or harm can also result if the vehicle travels in this situation.

Accordingly, there is a need for an improved work assist vehicle which includes means for detecting if something or someone is located on a portion of a body of the vehicle.

### Summary of the Invention

The present invention is directed to a multi-task capable work assist vehicle designed for transporting and elevating an operator with goods or equipment. Its uses include order picking, in-house service maintenance, stock management, cargo delivery, and the like. It is designed to be compact in size to be highly maneuverable for use in narrow storage aisles and tight quarters.

In accordance with an aspect of the present invention, a vehicle comprises: a self propelled, steerable body including a chassis and a drive mechanism supported on the chassis; a mast assembly coupled to the body; and, a personnel compartment attached to the mast assembly and being movable by the mast assembly toward and away from the body. The body further includes a cover adapted to extend over a portion of the chassis and a weight sensor assembly coupled to the chassis and the cover. The weight sensor assembly is capable of detecting if someone or something is located on the cover. The body further comprises a controller.

The weight sensor assembly may comprise a support bar coupled to the chassis so as to be movable relative to the chassis. The cover is coupled to the support bar so as to move with the support bar. At least one spring is positioned between the support bar and the chassis for biasing the support bar away from the chassis. At least one microswitch is coupled to the chassis and positioned adjacent the support bar. The at least one microswitch is activated by the support bar if the support bar is moved against the at least one spring toward the chassis by someone or something located on the cover. The at least one microswitch generates a presence-detected signal when activated and the presence-detected signal is coupled to the controller,

It is, thus, an object of the invention of the present application to provide a sensing arrangement for sensing if someone or something is located on a portion of a work assist vehicle and may be injured or damaged by or cause harm to the vehicle if operation of the vehicle continues.

Other objects and advantages of the invention will be apparent from the following description, the accompanying drawings and the appended claims.

### BRIEF DESCRIPTION OF THE DRAWINGS

Fig. 1 is a perspective view of a work assist vehicle including the invention of the present application;
Fig. 2 is a perspective view of the vehicle of Fig. 1 with the operator's platform or compartment in the raised position;
Fig. 3 is a side elevational view of the vehicle shown in Fig. 1;
Fig. 4 is a plan view of the vehicle shown in Fig. 1;
Fig. 5 is a rear elevational view of the vehicle with the operator's compartment in its lowermost position and with a portion of the vehicle shown in phantom;
Fig. 6 is a side elevational view of the vehicle with the operator's compartment in the raised position;
Fig. 7 is a perspective view of the drive motor compartment (the operator's compartment being in the raised position) with the motor cover installed;
Fig. 8 is a perspective view of the drive motor compartment (the operator's compartment being in the raised position) with the motor cover removed;
Fig. 9 is a plan view of the motor compartment with the motor cover installed;
Fig. 10 is a plan view of the motor compartment with the motor cover removed;
Fig. 11 is a view taken along view line 11-11 in Fig. 9;
Fig. 12 is a view taken along view line 12-12 in Fig. 10;
Fig. 13 is an exploded, perspective view of the motor cover, and
Fig. 14 is a simplified electrical schematic of a control circuit used in the present invention.

### Detailed Description of Preferred Embodiments

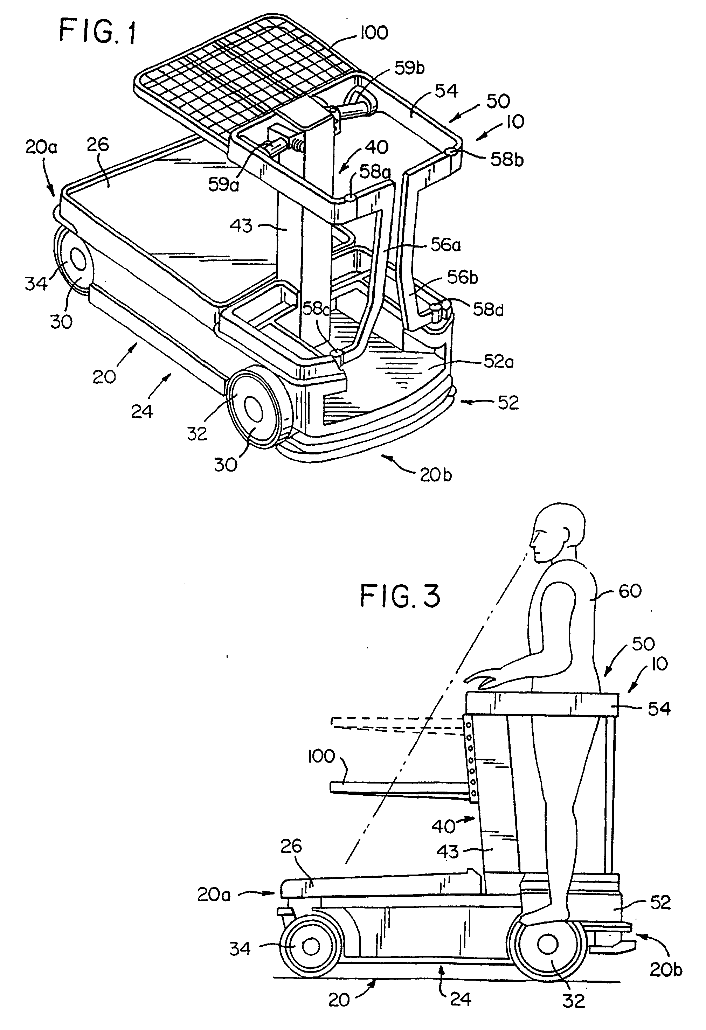

A work assist vehicle 10 constructed in accordance with the present invention is illustrated in Figs. 1-6. It includes a self-propelled, steerable body 20 having a front 20a and a rear 20b. The body 20 comprises a chassis 24 and a drive mechanism 30 supported on the chassis 24. The drive mechanism 30 includes a pair of drive wheels 32 mounted near the rear 20b of the body 20, and a pair of caster wheels 34 mounted near the front 20a of the body 20. A load deck or platform 26 is removably attached to the chassis 24.

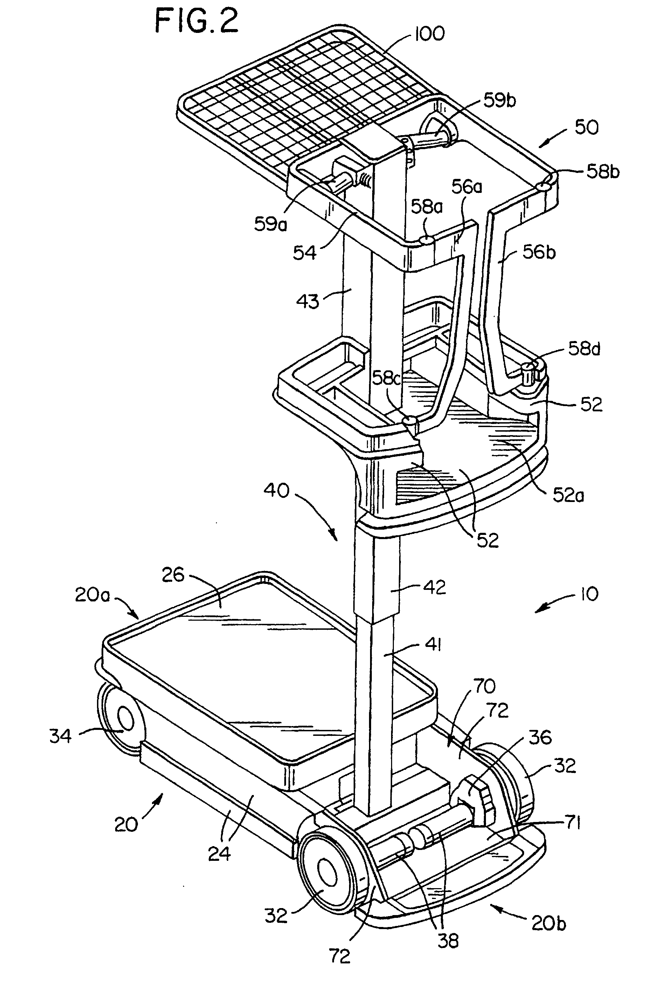

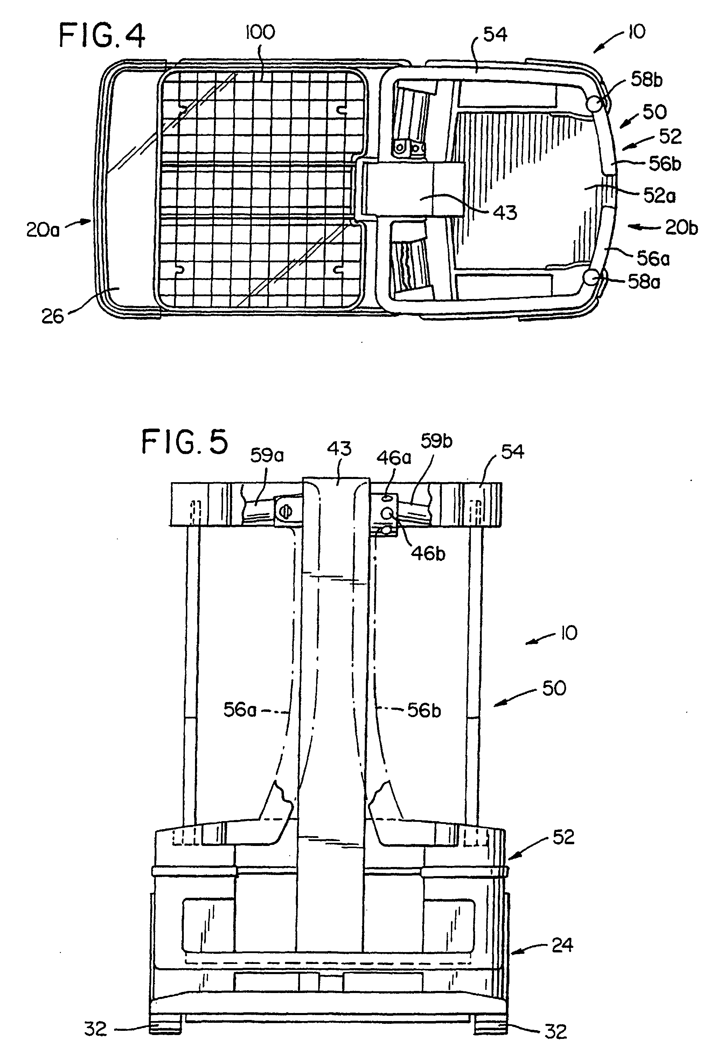

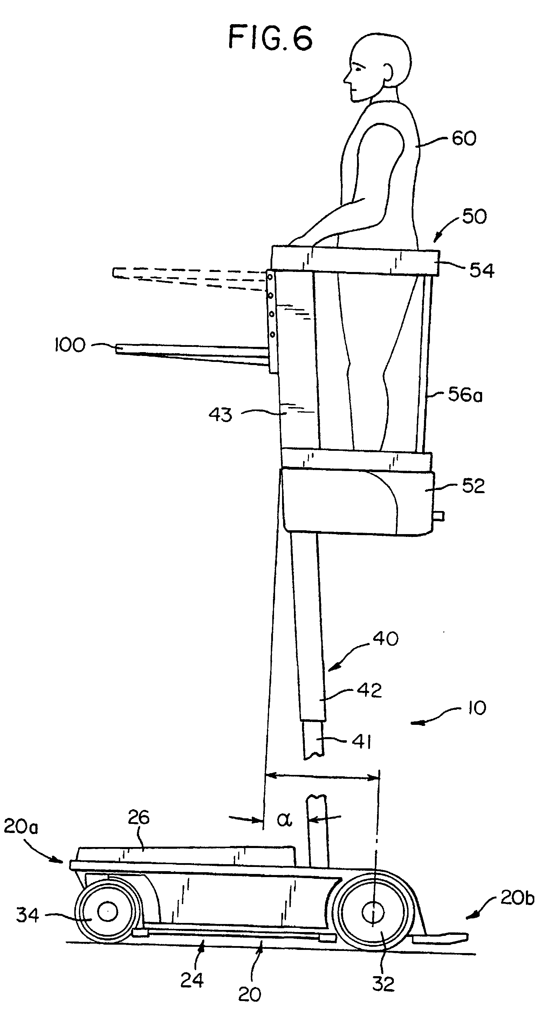

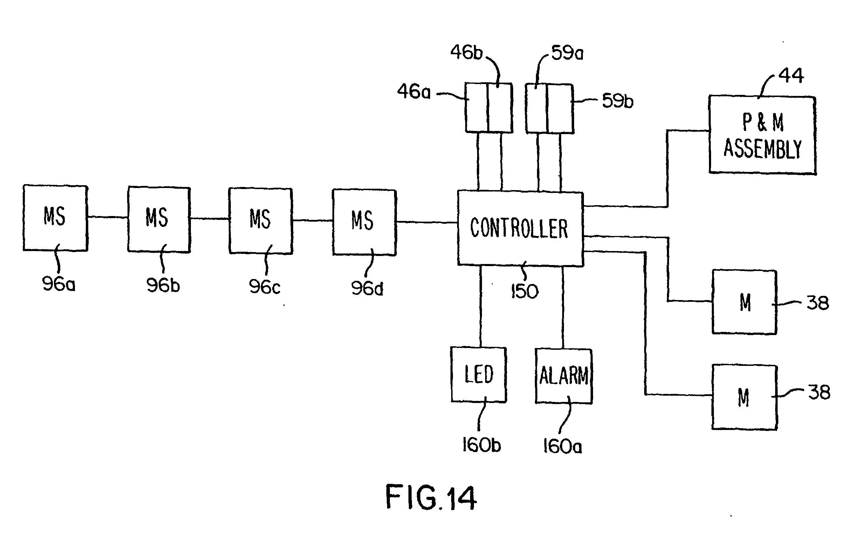

A mast assembly 40 is coupled to the body 20. As shown in Fig. 2, the mast assembly 40 includes three nested sections 41, 42, and 43. It further includes an elevating device for effecting extension and retraction of the sections 42 and 43. The elevating device comprises a hydraulic cylinder (not shown) coupled to a hydraulic pump and motor assembly 44 which, in turn, is coupled to a vehicle controller 150, see Fig. 14. Push button switches 46a and 46b are provided, see Fig. 5, and are coupled to the controller 150, see Fig. 14. Upon actuation of the switch 46a, the elevating device extends the mast sections 42 and 43 from their retracted positions, see Figs. 1 and 3, to their fully extended positions, shown in Figs. 2 and 6. When the switch 46b is activated, the elevating device retracts the sections 42 and 43. While three mast sections are illustrated, the number of mast sections actually used may vary.

An operator's or personnel compartment 50 is attached to the mast assembly 40, and specifically to the outer or upper mast section 43. Hence, the compartment 50 moves with the upper mast section 43. The compartment 50 includes a base 52 removably attached to the mast section 43, a rail member 54 mounted to the mast section 43 and extending around the sides and front of the personnel compartment 50, and a pair of gate members 56a and 56b pivotally attached to the rail member 54 at 58a and 58b, respectively, and to the base 52 at 58c and 58d, respectively. The gate members 56a and 56b are movable from a closed position, as shown in Fig. 1, to an open position wherein the gate members 56a and 56b extend into the personnel compartment 50. As shown in Figs. 1 and 2, the base 52 includes a floor 52a upon which an operator 60 stands.

As shown in Figs. 3 and 6, the rail member 54, as well as the top of the mast section 43, is placed approximately waist height of an operator 60 standing within the personnel compartment 50. The mast assembly 40 does not extend above the rail member 54 in the illustrated embodiment, thus giving the operator 60 unobstructed access to anything above the top edge of the rail member 54.

As shown in Fig. 6, the lower mast section 41 is attached to the body 20 and extends upwardly and forward of the vehicle at an angle α of approximately 5° from vertical. Hence, as the mast sections 42 and 43 are extended, the personnel compartment 50 is moved upwardly and forwardly. The personnel compartment 50 benefits by the 5° tilt of the mast assembly 40 in that the upper portion of the compartment 50, near the waist of the operator 60, is larger than the floor, thus accommodating the operator 60 comfortably without increasing the length of the vehicle 10.

A removable load tray 100 may be mounted on the mast section 43 to assist the operator 60 as materials are picked from shelves, or in holding materials to be used during maintenance.

The personnel compartment 50 includes a pair of control handles, namely, a steering control handle 59a and a traction control handle 59b, see Fig. 1. The control handles 59a and 59b are coupled to the controller 150, see Fig. 14. When the vehicle 10 is in operation, the operator 60 must have one hand on the steering control handle 59a and the other hand on the traction control handle 59b. This ensures that the operator's hands are within the personnel compartment 50 when the vehicle 10 is being moved or during lifting or lowering operations.

The chassis 24 includes a traction motor compartment 70 which is located directly beneath the personnel compartment 50. In Figs. 2, 8, 10 and 12, a motor cover 80, which normally encloses the traction motor compartment 70, has been removed to reveal the contents of the compartment 70. Also in Fig. 2, a weight sensor assembly 90, which will be discussed in detail below, has been removed. The traction motor compartment 70 comprises a floor 71 and a pair of side walls 72.

The drive mechanism 30 further includes two gear boxes 36 and two electric traction motors 38. The gear boxes 36 couple the wheels 32 to the motors 38. The motors 38 are connected to the controller 150 which, in turn, is connected to the steering control handle 59a and traction control handle 59b, see Fig. 14. The controller 150 controls the operation of the motors 38 in response to signals generated by the handles 59a and 59b.

The gear boxes 36 are mounted on the side walls 72 of the motor compartment 70 and the motors 38 are mounted to the gear boxes 36. The center axis of each of the traction motors 38 is below the center axes of the wheels 32, thus permitting the floor 52a of the personnel compartment 50 to be lowered as close to ground level as possible, at a height approximately seven inches above the floor.

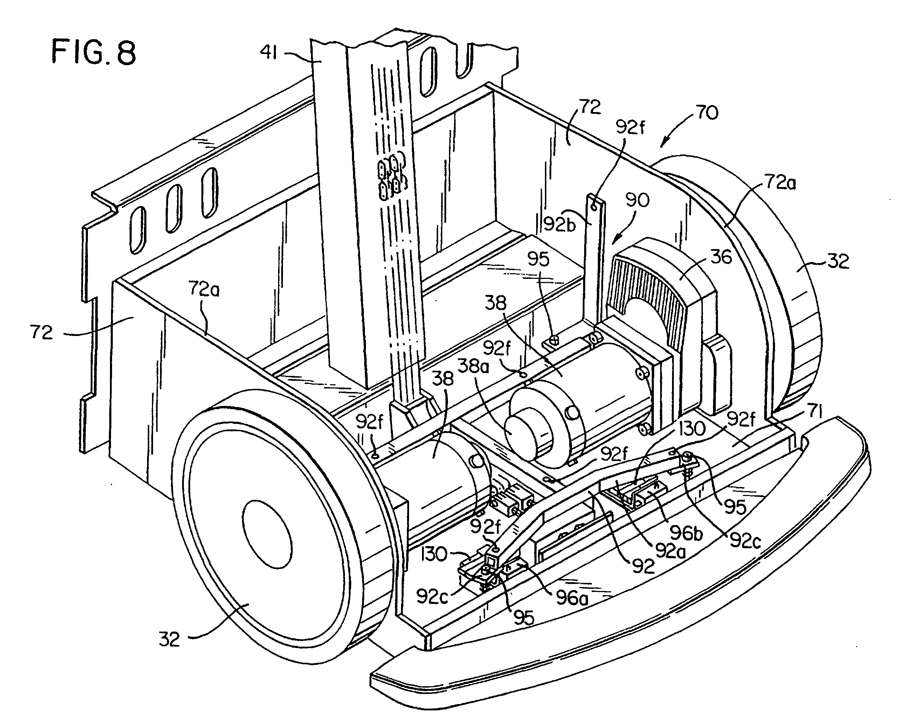

The weight sensor assembly 90 is located in the motor compartment 70, see Figs. 8 and 10-12. It comprises a support bar 92 comprising a generally H-shaped portion 92a and a pair of vertically extending side portions 92b. The motor cover 80 is connected to the support bar 92, as will be discussed in further detail below. The bar 92 is supported on four springs 94 surrounding a like number of bolts 95. The bolts 95 pass through openings in brackets 92c weldably or otherwise fixedly coupled to the H-shaped portion 92a and are threadedly coupled to the motor compartment floor 71. The bar 92 is biased away from the floor 71 by the springs 94 but is capable of moving against the force of the springs toward the floor 71 when acted upon by a downward force. First, second, third and fourth positive-acting-normally-closed microswitches 96a-96d are fixedly coupled to the floor 71 and positioned directly beneath the H-shaped bar 92. The microswitches 96a-96d are connected to the vehicle controller 150, see Fig. 14. When the bar 92 is depressed toward the floor 71, it activates one or more of the microswitches 96a-96d.

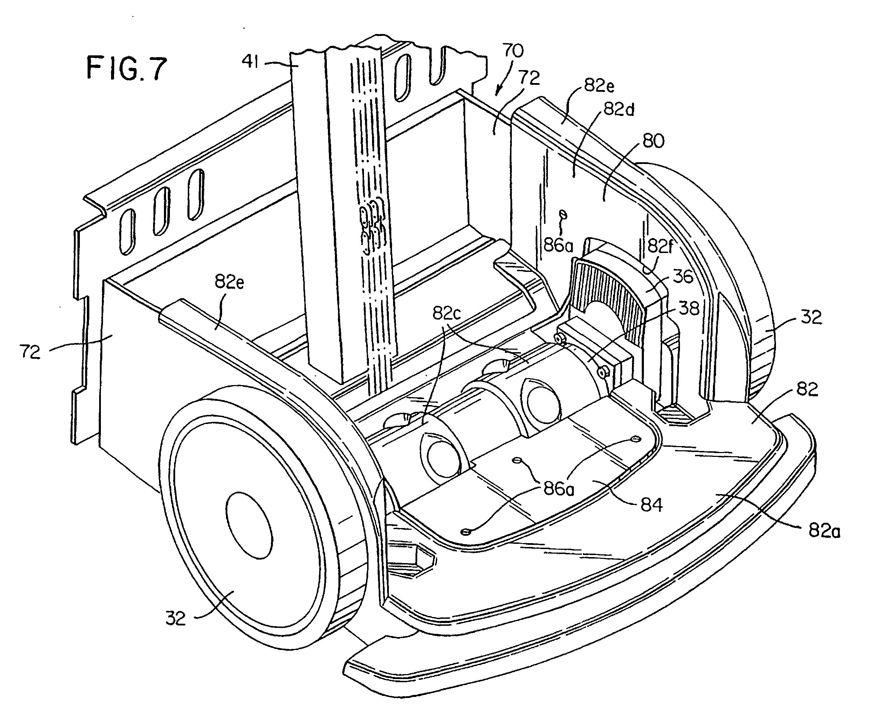

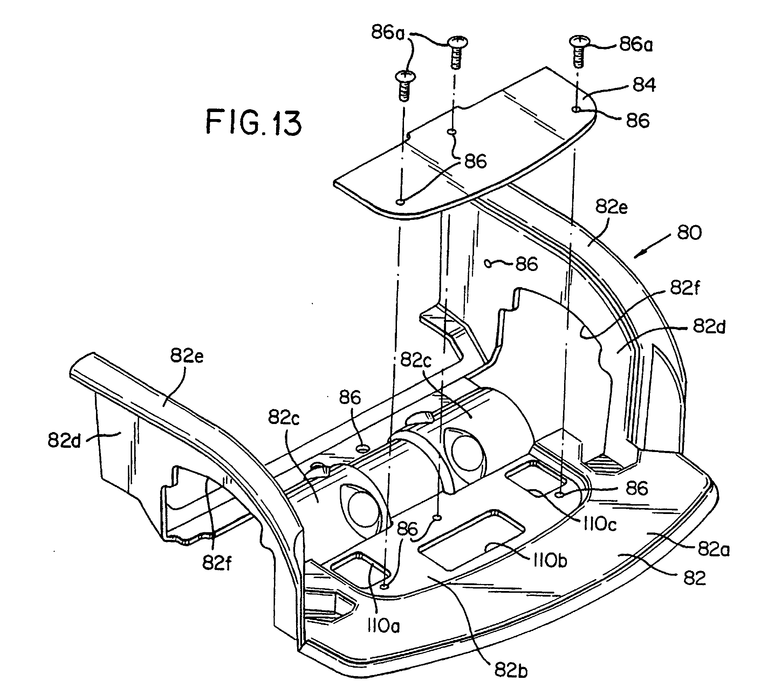

As noted above, the motor cover 80 encloses the motor compartment 70, see Figs. 7, 9 and 11. The cover 80 includes a main body portion 82 and an access panel 84, see also Fig. 13. Both the main body portion 82 and the access panel 84 are formed of molded plastic. The main body portion 82 includes a floor area 82a, a recessed area 82b provided with three openings 110a, 110b and 110c, a pair of semicylindrical motor cover elements 82c, vertical panels 82d with generally horizontal flange portions 82e to cover upper edges 72a of the motor compartment side walls 72, and openings 82f to accommodate the gear boxes 36. The access panel 84 covers the recessed area 82b. Openings 86 are provided in the vertical panels 82d, the floor area 82a, the recessed area 82b and the access panel 84 so as to allow bolts 86a to pass therethrough and threadedly engage openings 92f in the bar 92. The cover 80 is connected only to the bar 92 such that it moves towards and away from the floor 71 with the bar 92.

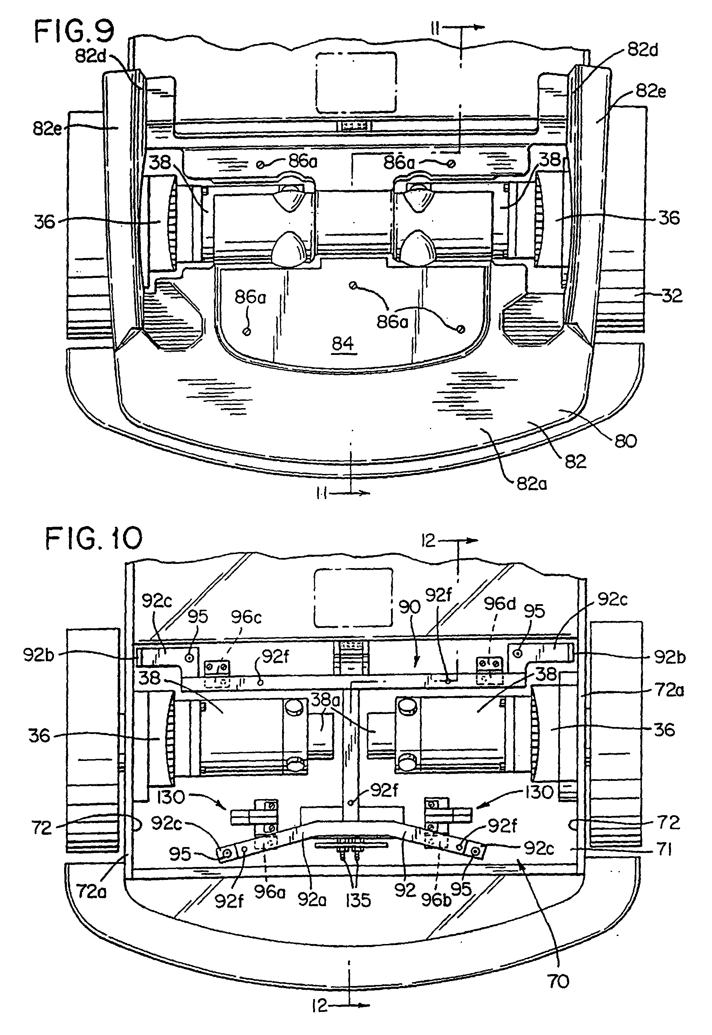

The openings 110a and 110c provide access to traction motor electrical power disconnect blocks 130 while the opening 110b provides access to chain tensioning screws 135, see Fig. 10. The recess 82b, and the openings 110a-110c, are covered by the access panel 84.

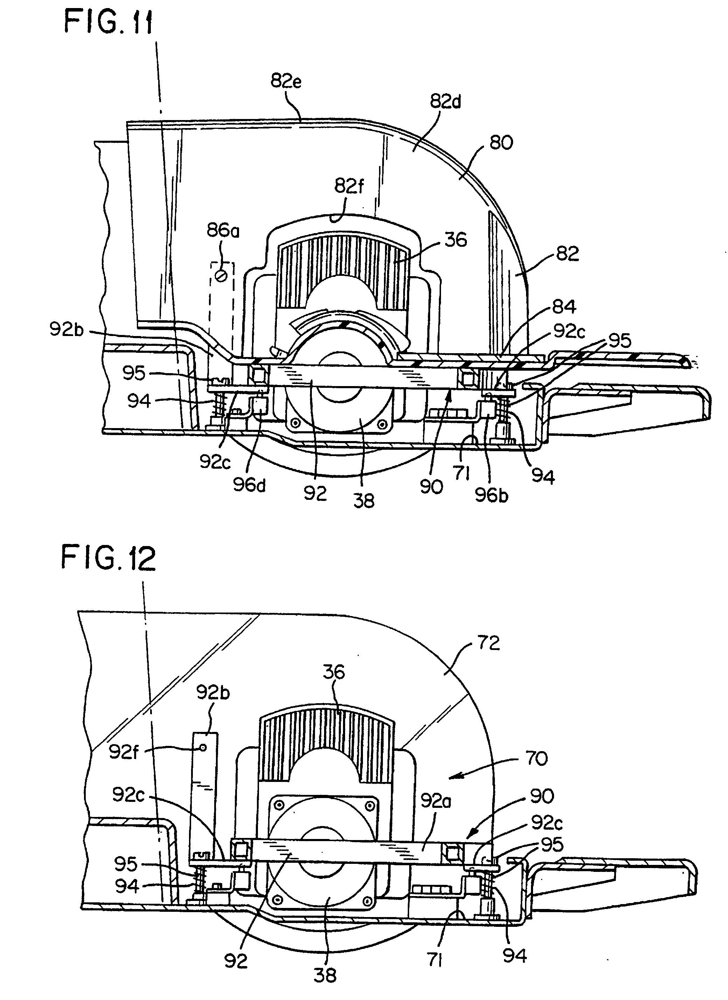

As shown in Fig. 11, the vertical space between the motor cover 80 and the components in the traction motor compartment 70 is kept at a minimum, in order to ensure that the floor 52a of the personnel compartment 52 does not make contact with the motor cover 80.

If someone or something, e.g., a tool, a telephone book, a part, a package or the like, is placed or becomes positioned on the motor cover 80, the weight of the someone or something causes the motor cover 80 and the bar 90 to depress, activating one or more of the microswitches 96a-96d. The switches 96a-96d are connected in series and to the vehicle controller 150, see Fig. 14. If any one of the microswitches 96a-96d is activated as a result of someone or something being located on the cover 80, then vehicle movement and the passenger compartment lowering function are inhibited by the vehicle controller 150. More specifically, if one or more of the microswitches 96a-96d is activated, the controller 150 prevents the elevating device from lowering the passenger compartment 50 when the operator 60 actuates the switch 46b. It also causes the vehicle 10, if in motion, to be brought to a stop by regeneration, that is, causing the motors 38 to act as generators and return power to batteries (not shown) which also form part of the drive mechanism. Once the vehicle 10 is no longer moving, the controller 150 causes active brakes 38a, coupled to the motors 38, to be engaged, see Figs. 8 and 10. The raise function will not be inhibited but will remain active. An alarm 160a will also be sounded and a LED lamp 160b will flash as long as one of the microswitches 96a-96d remains activated, indicating a fault condition. Upon removal of the fault (removal of someone or something on the cover), the vehicle 10 will function normally without requiring a key reset, however, the lowering function will not be immediately restored, but will be fully restored after a delay period, such as a 7.5 second delay.

While the form of apparatus herein described constitutes a preferred embodiment of this invention, it is to be understood that the invention is not limited to this precise form of apparatus and that changes may be made therein without departing from the scope of the invention.

## Claims

1. A vehicle comprising:
a self propelled, steerable body (20) including a chassis (24) and a drive mechanism (30) supported on said chassis;
a mast assembly (40) coupled to said body;
a personnel compartment (50) attached to said mast assembly and being movable by said mast assembly toward and away from said body; and
said body further including a cover (80) adapted to extend over a portion of said chassis and a weight sensor assembly (90) coupled to said chassis and said cover, said weight sensor assembly being capable of detecting if someone or something is located on said cover.

2. A vehicle as claimed in claim 1 wherein said vehicle comprises a work assist vehicle.

3. A vehicle as claimed in claim 1 wherein said personnel compartment (50) includes a base (52) attached to said mast assembly (40) and being movable by said mast assembly toward and away from said body.

4. A vehicle as set forth in claim 1,2 or 3, wherein said chassis portion comprises a motor compartment which is located directly beneath said personnel compartment.

5. A vehicle as set forth in claim 1, 2 or 3, wherein said mast assembly (40) comprises two or more mast sections (41, 42, 43) and an elevating device coupled to said chassis and at least one of said mast sections, said elevating device causing said at least one mast section to move toward and away from said chassis (24), and said at least one mast section being coupled to said personnel compartment (50) such that said compartment moves with said at least one mast section.

6. A vehicle as set forth in claim 5, wherein said body further comprises a controller (150).

7. A vehicle as set forth in claim 6, wherein said weight sensor assembly (90) comprises:
a support bar (92) coupled to said chassis (24) and being movable relative to said chassis, said cover (80) being coupled to said support bar;
at least one spring (94) positioned between said support bar and said chassis for biasing said support bar away from said chassis; and
at least one microswitch (96) coupled to said chassis and positioned adjacent said support bar, said at least one microswitch being activated by said support bar if said support bar is moved against said at least one spring toward said chassis by someone or something located on said cover, said at least one microswitch generating a presence-detected signal if activated, said presence-detected signal being coupled to said controller (150).

8. A vehicle as set forth in claim 7, wherein said support bar comprises a generally H-shaped bar (92).

9. A vehicle as set forth in claim 8, wherein said at least one microswitch comprises first, second, third and fourth microswitches (96a-96d) positioned beneath said generally H-shaped bar (92).

10. A vehicle as set forth in claim 7, wherein said controller (150), upon receiving said presence-detected signal, prevents said elevating device from lowering said personnel compartment (50) toward said chassis (24).

11. A vehicle as set forth in claim 10, wherein said drive mechanism (30) comprises at least one drive wheel (32) and at least one drive motor assembly (36, 38, 38a) coupled to and adapted to drive said at least one drive wheel, said controller (150) preventing said drive motor assembly from driving said at least one drive wheel upon receiving said presence-detected signal.

12. A vehicle as set forth in claim 11, wherein said drive motor assembly (36,38,38a) includes a brake (38a), said controller (150) causing said brake to be engaged upon receiving said presence-detected signal.

13. A vehicle as set forth in claim 12, wherein said microswitch (96) is deactivated when said object is removed from said cover (80), said controller (150) permitting said elevating device to lower said personnel compartment (50) toward said chassis (24) a predetermined delay period following deactivation of said at least one microswitch.

## Patentansprüche

1. Fahrzeug, umfassend:
ein selbst angetriebenes, steuerbares Fahrgestell (20) mit einem Rahmen (24) und einem Antriebsmechanismus (30), der vom Rahmen getragen wird;
eine Mastanordnung (40), die mit dem Fahrgestell verbunden ist;
ein Personenabteil (50), das mit der Mastanordnung verbunden ist und durch die Mastanordnung in Richtung des Fahrgestells und weg von diesem bewegt werden kann; und
wobei das genannte Fahrgestell weiterhin eine Abdeckung (80) umfaßt, die so ausgestaltet ist, dass sie sich über einen Teil des Rahmens erstreckt und eine Gewichts-Sensoranordnung (90) aufweist, die mit dem Rahmen und der Abdeckung verbunden ist, wobei die Gewichts-Sensoranordnung in der Lage ist, aufzuspüren, wenn sich jemand oder etwas auf der Abdeckung befindet.

2. Fahrzeug nach Anspruch 1, worin das Fahrzeug ein Arbeitsunterstützungs-Fahrzeug ist oder umfaßt.

3. Fahrzeug nach Anspruch 1, worin das Personenabteil (50) einen Bodenteil (52) umfaßt, der mit der Mastanordnung (40) verbunden ist, und mit Hilfe der Mastanordnung in Richtung des genannten Fahrgestells und weg von diesem bewegt werden kann.

4. Fahrzeug nach einem der Ansprüche 1, 2 oder 3, worin der Rahmenteil ein Motorabteil aufweist, das direkt unterhalb des Personenabteils angeordnet ist.

5. Fahrzeug nach einem der Ansprüche 1, 2 oder 3, worin die Mastanordnung (40) zwei oder mehr Mastabschnitte (41, 42, 43) und eine Hebevorrichtung aufweist, die mit dem Rahmen und mit mindestens einem der genannten Mastabschnitte verbunden ist, wobei die Hebevorrichtung bewirkt, dass sich mindestens ein Mastabschnitt in Richtung des Rahmens (24) und weg von diesem bewegen kann, und wobei der mindestens eine Mastabschnitt derart mit dem Personenabteil (50) verbunden ist, das dieses Abteil sich mit dem mindestens einen Mastabschnitt bewegt.

6. Fahrzeug nach Anspruch 5, worin das Fahrgestell weiterhin eine Reglereinrichtung (150) aufweist.

7. Fahrzeug nach Anspruch 6, worin die Gewichts-Sensoranordnung (90) umfaßt:
einen Träger (92), der mit dem Rahmen (24) verbunden ist und relativ zu diesem Rahmen bewegt werden kann, wobei die Abdeckung (80) mit diesem Träger verbunden ist;
mindestens eine Feder (94), die zwischen dem genannten Träger und dem Rahmen angeordnet ist, um den Träger in eine vom Rahmen abgewandte Richtung vorzuspannen; und
mindestens einen Mikroschalter (96), der mit dem Rahmen verbunden ist und sich in Nachbarschaft zu dem Träger befindet, wobei der mindestens eine Mikroschalter durch den Träger aktiviert wird, wenn der Träger durch jemanden oder etwas, der/das sich auf der Abdeckung befindet, gegen die mindestens eine Feder in Richtung des Rahmens bewegt wird, wobei der mindestens eine Mikroschalter beim Aktivieren ein anwesenheitsdetektierendes Signal erzeugt, wobei das anwesenheitsdetektierende Signal mit der Reglereinrichtung (150) gekoppelt ist.

8. Fahrzeug nach Anspruch 7, worin der Träger eine im wesentlichen H-förmige Strebe (92) umfaßt.

9. Fahrzeug nach Anspruch 8, worin der mindestens eine Mikroschalter einen ersten, einen zweiten, einen dritten und einen vierten Mikroschalter (96a-96d) umfaßt, die unter der im wesentlichen H-förmigen Strebe (92) angeordnet sind.

10. Fahrzeug nach Anspruch 7, worin die Reglereinrichtung (150) nach Empfang des anwesenheitsdetektierenden Signals die Hebevorrichtung daran hindert, das genannte Personenabteil (50) in Richtung des genannten Rahmens (24) abzusenken.

11. Fahrzeug nach Anspruch 10, worin der Antriebsmechanismus (30) mindestens ein Antriebsrad (32) und mindestens eine Antriebsmotor-Anordnung (36, 38, 38a) aufweist, wobei die letztere mit dem mindestens einen Antriebsrad gekoppelt und so eingerichtet ist, dass sie dieses antreibt, wobei die Reglereinrichtung (150) die genannte Antriebsmotor-Einrichtung daran hindert, das mindestens eine Antriebsrad anzutreiben, wenn sie das genannte anwesenheitsdetektierende Signal empfangen hat.

12. Fahrzeug nach Anspruch 11, worin die Antriebsmotor-Einheit (36, 38, 38a) eine Bremse (38a) umfaßt, wobei die Steuereinrichtung (150) bewirkt, daß die Bremse aktiviert wird, wenn sie das genannte anwesenheitsdetektierende Signal empfangen hat.

13. Fahrzeug nach Anspruch 12, worin der genannte Mikroschalter (96) deaktiviert wird, wenn der genannte Gegenstand von der Abdeckung (80) entfernt worden ist, wobei die Reglereinrichtung (150) es nach einer vorgegebenen Verzögerungsperiode, die auf die Deaktivierung des mindestens einen Mikroschalters folgt, zuläßt, dass die genannte Hebeeinrichtung das Personenabteil (50) in Richtung des Rahmens (24) absenkt.

## Revendications

1. Véhicule comprenant :
un corps autopropulsé orientable (20) comprenant un châssis (24) et un mécanisme d'entraînement (30) supporté sur ledit châssis :
un ensemble de mât (40) couplé au dit corps ;
un compartiment pour personnel (50) fixé au dit ensemble de mât et pouvant être déplacé par ledit ensemble de mât en direction et loin dudit corps ; et
ledit corps comprenant en outre un couvercle (80) s'étendant sur une partie dudit châssis et un ensemble de capteur de poids (90) couplé au dit châssis et au dit couvercle, ledit ensemble de capteur de poids étant capable de détecter si quelqu'un ou quelque chose est situé sur ledit couvercle.

2. Véhicule selon la revendication 1 dans lequel ledit véhicule comprend un véhicule d'aide au travail.

3. Véhicule selon la revendication 1 dans lequel ledit compartiment pour le personnel (50) comprend une base (52) fixée au dit ensemble de mât (40) et pouvant être par ledit ensemble de mât en direction et loin dudit corps.

4. Véhicule selon la revendication 1, 2 ou 3 dans lequel ladite partie de châssis comprend un compartiment moteur situé directement à proximité dudit compartiment du personnel.

5. Véhicule selon la revendication 1, 2 ou 3 dans lequel ledit ensemble de mât (40) comprend deux ou plus sections de mât (41, 42, 43) et un dispositif élévateur couplé au dit châssis et à au moins une desdites sections de mât, ledit dispositif élévateur déplaçant l'une au moins desdites sections de mât en direction et loin dudit châssis (24) et au moins l'une desdites sections de mât étant couplée au dit compartiment du personnel (50) de telle sorte que ledit compartiment s e déplace avec au moins une desdites sections de mât.

6. Véhicule selon la revendication 5, dans lequel ledit corps comprend en outre un contrôleur (150).

7. Véhicule selon la revendication 6, dans lequel ledit ensemble capteur de poids (90) comprend :
une barre support (92) couplée au dit châssis (24) et pouvant être déplacée par rapport au dit châssis, ledit couvercle (80) étant couplé à ladite barre support ;
au moins un ressort (94) situé entre ladite barre support et ledit châssis pour déplacer en diagonale ladite barre support loin dudit châssis ; et
au moins un micro-contact (96) couplé au dit châssis et situé de manière adjacente à ladite barre support, ledit au moins un micro-contact étant activé par ladite barre support lorsque ladite barre support est déplacée contre ledit au moins un ressort en direction dudit châssis par quelqu'un ou quelque chose situé sur ledit couvercle, ledit au moins un micro-contact générant un signal de détection de présence s'il est activé, ledit signal de détection de présence étant couplé au dit contrôleur (150).

8. Véhicule selon la revendication 7, dans lequel ladite barre support comprend une barre approximativement en forme de H (92).

9. Véhicule selon la revendication 8, dans lequel ledit au moins un micro-contact comprend un premier, un deuxième, un troisième et un quatrième micro-contacts (96a-96d) situés en dessous de ladite barre approximativement en forme de H (92).

10. Véhicule selon la revendication 7, dans lequel ledit contrôleur (150), à la réception dudit signal de détection de présence, empêche ledit dispositif élévateur de d'abaisser ledit compartiment du personnel (50) en direction dudit châssis (24).

11. Véhicule selon la revendication 10, dans lequel ledit mécanisme d'entraînement (30) comprend au moins une roue d'entraînement (32) et au moins un ensemble de moteur d'entraînement (36, 38, 38a) couplé à et apte à entraîner ladite au moins une roue d'entraînement, ledit contrôleur (150) empêchant ledit ensemble de moteur d'entraînement d'entraîner ladite au moins une roue d'entraînement lors de la réception dudit signal de détection de présence.

12. Véhicule selon la revendication 11 dans lequel ledit ensemble de moteur d'entraînement (36, 38, 38a) comprend un frein (38a), ledit contrôleur (150) actionnant ledit frein lors de la réception dudit signal de détection de présence.

13. Véhicule selon la revendication 12 dans lequel ledit micro-contact (96) est désactivé lorsque ledit objet est retiré dudit couvercle (80), ledit contrôleur (150) permettant au dit dispositif élévateur d'abaisser ledit compartiment du personnel (50) en direction dudit châssis (24) après un délai pré-déterminé après la désactivation dudit au moins un micro-contact.
